# EUROPEAN PATENT APPLICATION

(11) **EP 4 782 713 A1**
(43) Date of publication of application: **29.07.2026**
(21) Application number: 24868359.1
(22) Date of filing: 20.09.2024
(51) Int. Cl.: F16C 43/04, F16C 19/06, F16C 33/41, F16C 33/66

(54) **BALL BEARING AND METHOD FOR APPLYING GREASE TO BALL BEARING**

(30) Priority: 22.09.2023 JP 2023158521
(71) Applicant: NSK Ltd., Tokyo 141-8560 (JP)
(72) Inventor: SASAKI, Masashi, Fujisawa-shi, Kanagawa 251-8501 (JP); SAKAMOTO, Tadahiko, Fujisawa-shi, Kanagawa 251-8501 (JP); YAMAMOTO, Toyohisa, Fujisawa-shi, Kanagawa 251-8501 (JP)
(74) Representative: Grünecker Patent- und Rechtsanwälte PartG mbB
(86) International application number: PCT/JP2024/033657
(87) International publication number: WO 2025/063282

(57) **Abstract**

This ball bearing comprises: an inner race (1) and an outer race (2), one of which is a rotating race and the other a non-rotating race; a plurality of balls (3) which are arranged with freedom to roll between the inner race (1) and the outer race (2); a retainer (4) which has an opening portion at one end, in the axial direction, of each pocket (41) for holding each of the plurality of balls (3); a shielding plate (50) which close a space between the inner ring (1) and the outer ring (2), at both ends in the axial direction; and grease (6) which is enclosed in a space (8) surrounded by the inner race (1), the outer race (2), the balls (3), and the shielding plate (50). During initial sealing, the grease (6) is in contact with the balls (3) and is separated from the retainer (4), on the opening portion side of the retainer (4) in the space (8).

## Description

### TECHNICAL FIELD

The present invention relates to a ball bearing and a method for applying grease to a ball bearing.

### BACKGROUND ART

In the related art, there has been proposed a ball bearing including an inner ring and an outer ring, one of which serves as a rotating ring and the other serves as a non-rotating ring, and a plurality of balls arranged with freedom to roll between the inner ring and the outer ring. As one of ball bearings in the related art, there is a ball bearing in which grease is sealed and used (so-called grease sealed ball bearing), and for example, has shield plates that close a space between an inner ring and an outer ring at both ends in an axial direction.

Patent Literature 1 describes a ball bearing in which grease is sealed in a space surrounded by an inner ring, an outer ring, balls, and shield plates, and the grease is disposed on a peripheral surface of a non-rotating ring (a groove shoulder inner peripheral surface of the outer ring) over an entire region in a circumferential direction.

### CITATION LIST

### PATENT LITERATURE

Patent Literature 1: JP2014-129872A

### SUMMARY OF INVENTION

### TECHNICAL PROBLEM

When the ball bearing in the related art in which the grease is initially sealed is directly operated, the rotational torque may become large due to the influence of agitation resistance of the grease. Therefore, a running-in operation or the like is usually performed to reduce the rotational torque. On the other hand, there is a demand for ball bearings to have reduced rotational torque with a shorter running-in operation time or even no running-in operation, and there is room for improvement.

The present invention has been made in view of the above-described problems, and an object of the present invention is to provide a ball bearing and a method for applying grease to a ball bearing that can achieve low torque without performing a running-in operation, just as after a running-in operation.

### SOLUTION TO PROBLEM

Therefore, the above object of the present invention is achieved by the following ball bearing configurations (1) to (5).
(1) A ball bearing including:
   an inner ring and an outer ring, one of which is a rotating ring and the other is a non-rotating ring;
   a plurality of balls which are arranged with freedom to roll between the inner ring and the outer ring;
   a cage which has an opening portion at one end in an axial direction of each pocket for holding the plurality of balls;
   shield plates which close a space between the inner ring and the outer ring at both ends in the axial direction; and
   grease which is sealed in a space surrounded by the inner ring, the outer ring, the balls, and the shield plates,
   wherein the grease is disposed to come into contact with the balls, is disposed on a peripheral surface of the non-rotating ring, which forms the space, on a side closer to the opening portion of the cage over an entire region of the peripheral surface in a circumferential direction, and is disposed apart from the cage.
(2) In the ball bearing according to (1),
   the cage holds the ball in the pocket in a state where a part of the ball is exposed to the opening portion.
(3) In the ball bearing according to (1) or (2),
   a raceway on which the plurality of balls roll is defined between the inner ring and the outer ring,
   an open end of the cage is located within the raceway, and
   the grease is located outside the raceway.
(4) In the ball bearing according to any one of (1) to (3),
   the grease is disposed apart from the rotating ring.
(5) A method for applying grease to a ball bearing,
   the ball bearing including
   an inner ring and an outer ring, one of which is a rotating ring and the other is a non-rotating ring,
   a plurality of balls which are arranged with freedom to roll between the inner ring and the outer ring,
   a cage which has an opening portion at one end in an axial direction of each pocket for holding the plurality of balls,
   shield plates which close a space between the inner ring and the outer ring at both ends in the axial direction, and
   grease which is sealed in a space surrounded by the inner ring, the outer ring, the balls, and the shield plates,
   the method including:
      a step of applying the grease to a peripheral surface of the non-rotating ring, which forms the space, on a side closer to the opening portion of the cage over an entire region of the peripheral surface in a circumferential direction while bringing the grease into contact with the balls and separating the grease from the cage.

### ADVANTAGEOUS EFFECTS OF INVENTION

According to the above configurations (1) and (5), for example, in the initial sealed state, the grease is disposed so as to come into contact with the balls, is disposed on the peripheral surface of the non-rotating ring, which forms the space, on the side closer to the opening portion of the cage over an entire region of the peripheral surface in the circumferential direction, and is disposed apart from the cage. Thus, according to the above configuration, the balls roll more smoothly than in a case where the grease is not in contact with the balls, and the grease is less likely to be crushed than in a case where the grease is not separated from (is in contact with) the cage. As a result, an amount of thickener contained in the grease that enters the raceway defined between the inner ring and the outer ring is reduced, so that an increase in the rotational torque is reduced.

That is, according to the above configuration, as the grease comes into contact with the balls while being spaced apart from the cage, the base oil of the grease is discharged, and the influence of the thickener is reduced, allowing the ball to roll smoothly.

As described above, according to the above configuration, since the cause of increase in the rotational torque is eliminated, it is possible to achieve low torque without performing the running-in operation, just as after a running-in operation.

According to the above configuration (2), since the cage holds the ball in the pocket in a state of being partially exposed on one end side in the axial direction, a contact state between the grease and the ball and a separation state between the grease and the cage are appropriately maintained.

According to the above configuration (3), the open end of the cage is located within the raceway and the grease is located outside the raceway, so that the separation state between the grease and the cage is more appropriately maintained.

According to the above configuration (4), the grease is disposed away from the rotating ring. Therefore, the grease is less likely to be crushed even when the bearing space is narrow, as compared with a ball bearing in which the grease is also applied to a surface of the rotating ring by a predetermined amount (not a small amount, but, for example, an amount equivalent to that of a non-rotating ring).

According to the present disclosure, it is possible to provide a ball bearing and a method for applying grease to a ball bearing that can achieve low torque without performing a running-in operation, just as after a running-in operation.

### BRIEF DESCRIPTION OF DRAWINGS

[Fig. 1] Fig. 1 is a cross-sectional view showing a ball bearing according to an embodiment of the present invention.
[Fig. 2] Fig. 2 is a cross-sectional view taken along a line A-A of Fig. 1.
[Fig. 3] Fig. 3 is a cross-sectional view taken along a line B-B of Fig. 1.
[Fig. 4] Fig. 4 shows a ball bearing according to a comparative example, and corresponds to Fig. 2.
[Fig. 5] Fig. 5 is graphs showing evaluation results, where (a) shows an example and (b) shows a comparative example.

### DESCRIPTION OF EMBODIMENTS

### <One Embodiment >

Hereinafter, an example of an embodiment of a ball bearing and a method for applying grease to a ball bearing according to the present invention will be described with reference to the drawings. The ball bearing is used in, for example, a vacuum pump. The present invention is not limited to the embodiment described below, and may be appropriately modified, improved, or the like. Further, a material, a shape, a size, the number of, an arrangement position, and the like of each component in the embodiment described below are not limited as long as the present invention can be achieved.

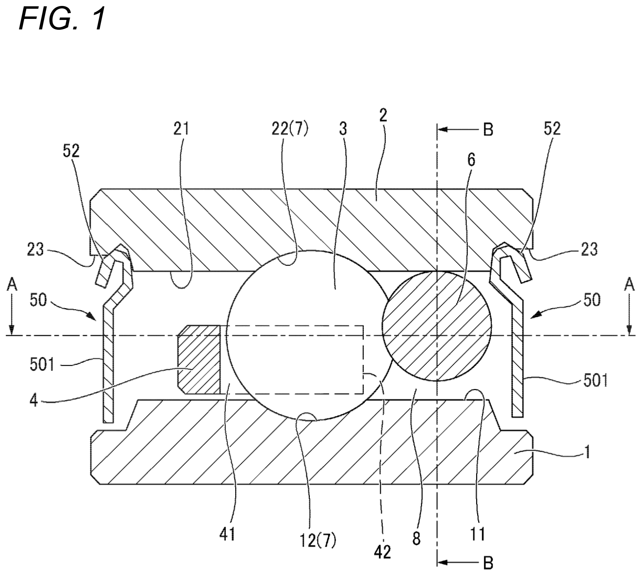

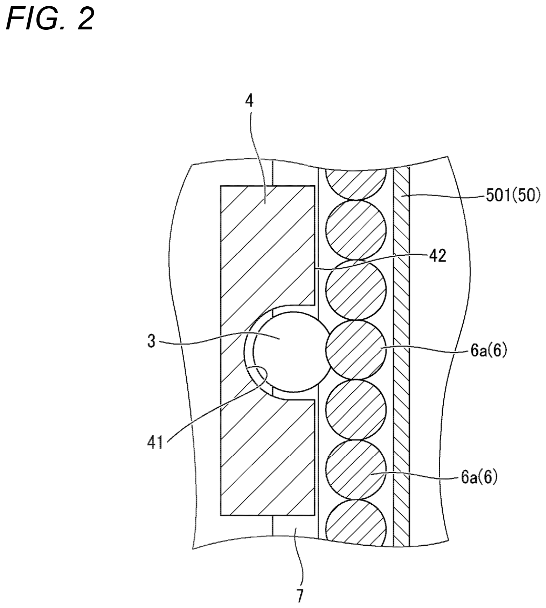

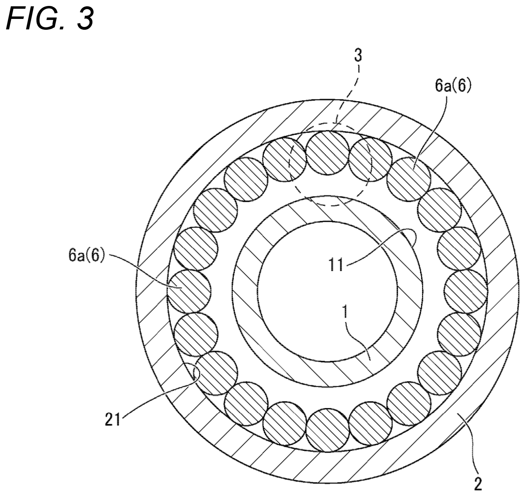

Fig. 1 is a cross-sectional view showing a ball bearing according to an embodiment of the present invention. Fig. 2 is a cross-sectional view taken along a line A-A of Fig. 1. Fig. 3 is a cross-sectional view taken along a line B-B of Fig. 1. The ball bearing includes an inner ring 1, an outer ring 2, a ball 3, a cage 4, shield plates 50, and grease 6. In this example, the inner ring 1 is a rotating ring, and the outer ring 2 is a non-rotating ring.

A raceway 7 of the ball 3 is defined between the inner ring 1 and the outer ring 2. Specifically, an inner ring raceway groove 12 that constitutes the raceway 7 is formed in a central portion in an axial direction (left-right direction in Fig. 1) of a groove shoulder outer peripheral surface 11 of the inner ring 1, and an outer ring raceway groove 22 that constitutes the raceway 7 is formed in a central portion in the axial direction of a groove shoulder inner peripheral surface 21 of the outer ring 2.

Attachment grooves 23 for the shield plates 50 are formed at both end portions in the axial direction of the groove shoulder inner peripheral surface 21 of the outer ring 2. The shield plate 50 is made of metal, and an inner peripheral edge portion of the shield plate 50 forms a proximity portion 501 that is adjacent to the groove shoulder outer peripheral surface 11 of the inner ring 1 with a predetermined gap therebetween. The proximity portion 501 is not bent inward in the axial direction. An outer peripheral edge portion of the shield plate 50 serves as a fixing portion 52 that is fixed to the attachment groove 23 formed in the groove shoulder inner peripheral surface 21 of the outer ring 2.

The cage 4 is a crown-shaped cage made of a synthetic resin and has pockets 41 that are open on one side (right side in Fig. 1) in the axial direction. The cage 4 is formed such that the ball 3 can be held in the pocket 41 in a state of being partially exposed on an opening side. That is, a depth of the pocket 41 is smaller than a diameter of the ball 3. The cage 4 is formed such that an open end 42 (so-called claw portion or the like) is located within the raceway 7.

As shown in Fig. 1, the grease 6 is applied (sealed) to the groove shoulder inner peripheral surface 21 of the outer ring 2 so as to come into slight contact with the ball 3 on the opening side of the cage 4 in a space 8 (bearing space) surrounded by the inner ring 1, the outer ring 2, the ball 3, and the shield plates 50. The grease 6 is not applied to the space on a side opposite to the opening portion of the cage 4.

As shown in Fig. 2, the grease 6 is applied (sealed) to the groove shoulder inner peripheral surface 21 of the outer ring 2 so as to be located outside the raceway 7, and is not in contact with the cage 4 (specifically, the open end 42). The grease 6 is not applied to the cage 4 (specifically, the open end 42).

As shown in Fig. 3, the grease 6 is applied (sealed) to the groove shoulder inner peripheral surface 21 of the outer ring 2 over the entire region in the circumferential direction. More specifically, the grease 6 includes a plurality of spherical grease particles 6a arranged without gaps on the groove shoulder inner peripheral surface 21 of the outer ring 2 over the entire region in the circumferential direction. The grease 6 is not applied to the groove shoulder outer peripheral surface 11 of the inner ring 1.

The application (sealing) of the grease 6 is performed before the shield plate 50 is attached such that the plurality of spherical grease particles 6a are arranged without gaps on the groove shoulder inner peripheral surface 21 of the outer ring 2 over the entire region in the circumferential direction from the opening side of the cage 4 using, for example, a nozzle having a plurality of holes. In this method, since a grease sealing device in the related art can be used, no new facilities are required and no increase in production costs occurs.

According to the present embodiment, the grease 6 is disposed so as to come into contact with the ball 3 at the time of initial sealing. Therefore, base oil in the grease adheres to the ball, making the ball 3 roll more smoothly than when the grease 6 is not in contact with the ball 3. Further, for example, since the grease 6 is disposed to be spaced apart from the cage 4 in an initial sealed state, the grease 6 is less likely to be crushed compared to when the grease 6 is not spaced apart from (is in contact with) the cage 4. As a result, an amount of thickener contained in the grease 6 that enters the raceway 7 is reduced, so that an increase in the rotational torque is reduced.

That is, as the grease 6 comes into contact with the ball 3 while being spaced apart from the cage 4, the base oil of the grease 6 is discharged, and the influence of the thickener is reduced, allowing the ball 3 to roll smoothly.

As described above, according to the present embodiment, since the cause of increase in the rotational torque is eliminated, it is possible to achieve low torque without performing the running-in operation, just as after a running-in operation.

Further, according to the present embodiment, since the cage 4 holds the ball 3 in the pocket 41 in a state of being partially exposed on the opening side (right side in FIG. 2), a contact state between the grease 6 and the ball 3 and a separation state between the grease 6 and the cage 4 are appropriately maintained.

Further, according to the present embodiment, the open end 42 of the cage 4 is located within the raceway 7 and the grease 6 is located outside the raceway 7, so that the separation state between the grease 6 and the cage 4 is more appropriately maintained.

Further, according to the present embodiment, the grease 6 is disposed away from the inner ring 1 which is the rotating ring. Therefore, the grease 6 is less likely to be crushed even when the bearing space (space 8) is narrow, as compared with a ball bearing in which the grease 6 is also applied to a surface of the rotating ring by a predetermined amount (not a small amount, but, for example, an amount equivalent to that of a non-rotating ring).

### <Test>

In order to evaluate the rotational torque before the running-in operation in an example and a comparative example, a preload of 2.4 kgf was applied to each ball bearing according to the example and the comparative example in an environment of room temperature of 20°C, and the rotational torque was measured at each rotation speed of 100 min⁻¹, 500 min⁻¹, and 3000 min⁻¹.

In the example, the ball bearing shown in Figs. 1 to 3 was used.

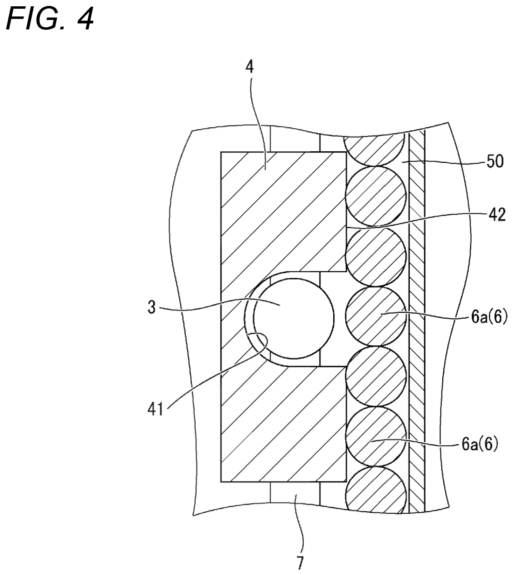

In the comparative example, a ball bearing used was as shown in Fig. 4, in which an open end of a cage protrudes toward a shield plate beyond an axial end of a ball, and grease contact is in contact with the open end of the cage.

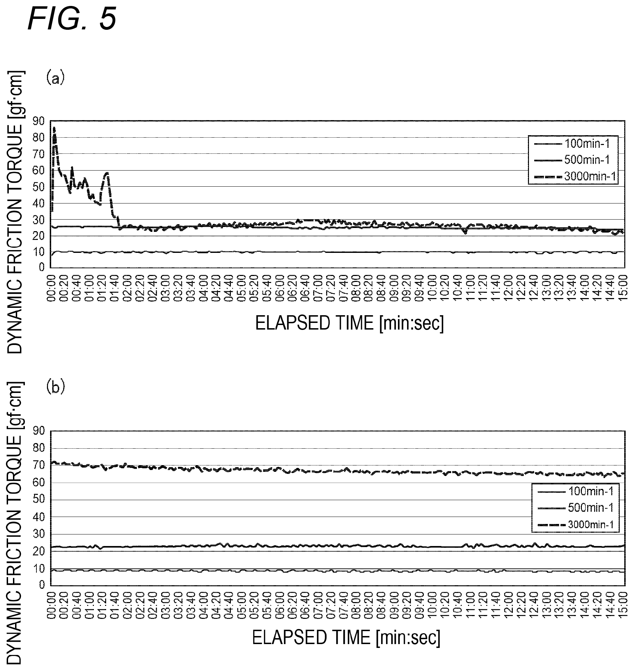

The evaluation results of the example and comparative example are shown in Fig. 5.

At low rotation speeds of 100 min⁻¹ and 500 min⁻¹, there is no clear difference between the example and the comparative example, but at 3000 min⁻¹, the example has a smaller dynamic friction torque value.

The rotational torque is determined by the sum of a load term (magnitude of load: Ml) and a speed term (magnitude of rotation speed: Mv). Here, if a coefficient determined by the bearing type and the lubrication method is f0, the kinetic viscosity of the oil is v0, and the rotation speed is n, the speed term (Mv) can be obtained by f0(v0·n)^(2/3)·dm^3. In view of this, it is considered that the difference between the example and the comparative example is less noticeable at the low rotation speeds of 100 min⁻¹ and 500 min⁻¹, and becomes clear at 3000 min⁻¹, where the rotation speed exceeds a certain value (for example, 1000 min⁻¹).

### <Supplementary Notes>

As described above, the following matters are disclosed in the present specification.
[1] A ball bearing including:
   an inner ring (1) and an outer ring (2), one of which is a rotating ring and the other is a non-rotating ring;
   a plurality of balls (3) which are arranged with freedom to roll between the inner ring (1) and the outer ring (2);
   a cage (4) which has an opening portion at one end in an axial direction of each pocket (41) for holding the plurality of balls (3);
   shield plates (50) which close a space between the inner ring (1) and the outer ring (2) at both ends in the axial direction; and
   grease (6) which is sealed in a space (8) surrounded by the inner ring (1), the outer ring (2), the balls (3), and the shield plates (50),
   wherein the grease (6) is disposed to come into contact with the balls (3), is disposed on a peripheral surface (for example, the groove shoulder inner peripheral surface 21 of the outer ring 2) of the non-rotating ring, which forms the space (8), on a side closer to the opening portion of the cage (4) over an entire region of the peripheral surface in a circumferential direction, and is disposed apart from the cage (4).
[2] In the ball bearing according to [1],
   the cage (4) holds the ball (3) in the pocket (41) in a state where a part of the ball is exposed to the opening portion.
[3] In the ball bearing according to [1] or [2],
   a raceway (7) on which the plurality of balls (3) roll is defined between the inner ring (1) and the outer ring (2),
   an open end (42) of the cage (4) is located within the raceway (7), and
   the grease (6) is located outside the raceway (7).
[4] In the ball bearing according to any one of [1] to [3],
   the grease (6) is disposed apart from the rotating ring (for example, the inner ring 1).
[5] A method for applying grease to a ball bearing,
   the ball bearing including
   an inner ring (1) and an outer ring (2), one of which is a rotating ring and the other is a non-rotating ring,
   a plurality of balls (3) which are arranged with freedom to roll between the inner ring (1) and the outer ring (2),
   a cage (4) which has an opening portion at one end in an axial direction of each pocket (41) for holding the plurality of balls (3),
   shield plates (50) which close a space between the inner ring (1) and the outer ring (2) at both ends in the axial direction, and
   grease (6) which is sealed in a space (8) surrounded by the inner ring (1), the outer ring (2), the balls (3), and the shield plates (50),
   the method including:
      a step of applying the grease (6) to a peripheral surface (for example, the groove shoulder inner peripheral surface 21 of the outer ring 2) of the non-rotating ring, which forms the space (8), on a side closer to the opening portion of the cage (4) over an entire region of the peripheral surface in a circumferential direction while bringing the grease into contact with the balls (3) and separating the grease from the cage (4).

The present application is based on a Japanese patent application (No. 2023-158521) filed on September 22, 2023, contents of which are incorporated herein by reference.

### INDUSTRIAL APPLICABILITY

According to the ball bearing and the method for applying grease to a ball bearing of the present invention, for example, it is possible to implement a ball bearing and a method for applying grease to a ball bearing that can achieve low torque without performing a running-in operation, just as after a running-in operation.

### REFERENCE SIGNS LIST

1 inner ring
2 outer ring
3 ball
4 cage
6 grease
7 raceway
8 space
11 groove shoulder outer peripheral surface
12 inner ring raceway groove
21 groove shoulder inner peripheral surface
22 outer ring raceway groove
23 attachment groove
41 pocket
42 open end
50 shield plate
52 fixing portion
501 proximity portion

## Claims

1. A ball bearing comprising:
an inner ring and an outer ring, one of which is a rotating ring and the other is a non-rotating ring;
a plurality of balls which are arranged with freedom to roll between the inner ring and the outer ring;
a cage which has an opening portion at one end in an axial direction of each pocket for holding the plurality of balls;
shield plates which close a space between the inner ring and the outer ring at both ends in the axial direction; and
grease which is sealed in a space surrounded by the inner ring, the outer ring, the balls, and the shield plates,
wherein the grease is disposed to come into contact with the balls, is disposed on a peripheral surface of the non-rotating ring, which forms the space, on a side closer to the opening portion of the cage over an entire region of the peripheral surface in a circumferential direction, and is disposed apart from the cage.

2. The ball bearing according to claim 1,
wherein the cage holds the ball in the pocket in a state where a part of the ball is exposed to the opening portion.

3. The ball bearing according to claim 1,
wherein a raceway on which the plurality of balls roll is defined between the inner ring and the outer ring,
wherein an open end of the cage is located within the raceway, and
wherein the grease is located outside the raceway.

4. The ball bearing according to claim 1,
wherein the grease is disposed apart from the rotating ring.

5. A method for applying grease to a ball bearing,
the ball bearing including
an inner ring and an outer ring, one of which is a rotating ring and the other is a non-rotating ring,
a plurality of balls which are arranged with freedom to roll between the inner ring and the outer ring,
a cage which has an opening portion at one end in an axial direction of each pocket for holding the plurality of balls,
shield plates which close a space between the inner ring and the outer ring at both ends in the axial direction, and
grease which is sealed in a space surrounded by the inner ring, the outer ring, the balls, and the shield plates,
the method comprising:
a step of applying the grease to a peripheral surface of the non-rotating ring, which forms the space, on a side closer to the opening portion of the cage over an entire region of the peripheral surface in a circumferential direction while bringing the grease into contact with the balls and separating the grease from the cage.
